# EUROPÄISCHE PATENTSCHRIFT

(11) **EP 0 394 632 B1**
(45) Veröffentlichungstag und Bekanntmachung des Hinweises auf die Patenterteilung: **16.02.1994**
(21) Anmeldenummer: 90103124.5
(22) Anmeldetag: 19.02.1990
(51) Int. Cl.: G01L 9/04

(54) **Drucksensor und Verfahren zu seiner Herstellung**
Pressure sensor and method of fabricating the same
Palpeur de pression et procédé pour sa fabrication

(30) Priorität: 07.03.1989 DE 3907202; 14.06.1989 DE 3919411
(43) Veröffentlichungstag der Anmeldung: 31.10.1990
(73) Patentinhaber: Pfister GmbH, 86165 Augsburg (DE)
(72) Erfinder: Häfner, Hans Wilhelm, D-8890 Aichach-Walchshofen (DE)
(74) Vertreter: Kahler, Kurt, Dipl.-Ing.

(56) Entgegenhaltungen:
- DE-A- 3 303 980
- DE-A- 3 338 384
- DE-A- 3 616 308
- DE-A- 3 817 695
- GB-A- 1 540 716
- GB-A- 2 202 052

## Beschreibung

Die Erfindung betrifft einen Drucksensor mit einer keramischen Basis und einer damit verbundenen keramischen Membran, die abhängig vom angelegten Druck deformierbar ist, sowie ein Verfahren zur Herstellung eines derartigen Drucksensors gemäß dem Oberbegriff des Patentanspruchs 1 bzw. 7.

Die DE-A-38 17 695 offenbart einen keramischen Drucksensor der vorgenannten Art und ein Verfahren zu dessen Herstellung. Zuerst wird eine rohe keramische Membran geformt. Ferner wird eine rohe keramische Basisplatte gebildet. Diese beiden Elemente werden dann (unter Anlegen von Druck) zu einem laminaren Körper zusammengesetzt, der dann gebrannt wird, um durch Verbinden an aneinanderliegenden Kontaktflächen einen einheitlichen Keramiksensorkörper zu bilden.

Für diesen Sensor sind mehrere Verfahrensschritte notwendig, da die Membran und die Basis eigens geformt, dann zu einem Rohelement kombiniert und erst dann gebrannt werden. Insbesondere bei der Herstellung eines derartigen Drucksensors mit einem Hohlraum benachbart zur Membran ist dieses Herstellungsverfahren verhältnismäßig kompliziert, da zusätzlich ein rahmenartiges Abstandselement zwischen die Membran und die Basis eingesetzt wird und die Öffnung für den Hohlraum in dem Abstandselement und in der Durchgangsöffnung in dem Basiselement mit einem sublimierbaren Scheibeneinsatz bzw. einem Stangeneinsatz gefüllt werden müssen, bevor diese einzelnen Elemente miteinander zu einer Einheit zusammengefügt und zusammen gebrannt werden.

Dieser kombinierte, gebrannte Sensorkörper wird dann in ein Gehäuse eingesetzt und an seinem Umfangsteil nahe der Membran eingespannt. Hierdurch ergeben sich in der Membran Verspannungen, die die Meßgenauigkeit negativ beeinflussen.

Die US-A-4,382,247 offenbart einen Drucksensor mit einer flexiblen Membran, die als eigenes Element an einer ebenen, starren Basisplatte aufgebracht ist. Abhängig von der vage definierten Form der Membran mit der Folge von beträchtlichen Meßungenauigkeiten ist die Herstellung des bekannten Sensors kompliziert.

Die US-A-4,481,497 offenbart einen Drucksensor mit einem keramischen Substrat und einer keramischen Membran, die als getrennte Teile geformt und dann miteinander verbunden sind. Das Substrat ist mit einem Hohlraum versehen, der eine Deformierung der Membran ermöglicht. Die Membran ist mit Meßelementen versehen, die eine Widerstandsbrücke aufweisen. Auch dieser bekannte Sensor ist kompliziert im Aufbau und kostspielig herzustellen.

Die DE-A-35 10 042 offenbart einen Drucksensor mit Meßelementen und einer Druckmeßkapsel. Die Kapsel weist eine Membran auf, die in Oberflächenkontakt mit einer Membran des Druckwandlers ist. Die Membran der Kapsel bildet eine Wand des Hohlraums, der ferner definiert wird durch eine gegenüberliegende starre Platte und flexible Übergangsteile, die diese Platte mit der Membran verbinden. Wiederum ist der Aufbau des bekannten Druckwandlers kompliziert und seine Herstellung kostspielig.

Der Erfindung liegt die Aufgabe zugrunde, einen Drucksensor mit äußerst einfachem Aufbau und ein äußerst einfaches Verfahren zu dessen Herstellung anzugeben.

Der erfindungsgemäße Drucksensor besitzt die Merkmale des Patentanspruchs 1, das erfindungsgemäße Verfahren zur Herstellung eines Drucksensors die Merkmale des Patentanspruchs 7.

Da die Membran, die Basis und der Einspannteil einen einheitlichen keramischen Sensorkörper, vorzugsweise in einem Verfahrensschritt bilden, wird eine äußerst einfache Herstellung und eine hohe Verbindungsstabilität zwischen der Membran und dem Einspannteil erreicht, da weder Verbindungsmaterial noch Kontaktflächen zwischen den beiden funktionalen Elementen vorgesehen werden brauchen. Durch kombinierte Formung vor dem Brennen des Sensorkörpers ergibt sich ein homogener Übergang speziell in dem Übergangsbereich zwischen der Membran und dem Einspannteil. Da der Einspannteil von der Membran beabstandet ist, ergeben sich keine negativen Einflüsse oder Verspannungen in der Membran.

Der Drucksensor gemäß einem bevorzugten Ausführungsbeispiel mit einem Hohlraum und einem Gewindeanschluß ist von besonderem Vorteil bei der Herstellung und ist direkt an eine Druckquelle anschließbar. In diesem Falle werden eigene, kostspielig herzustellende Gehäuse zur Verkapselung des bekannten Sensorkörpers vollständig vermieden.

Bevorzugte Weiterbildungen der Erfindung bzw. des erfindungsgemäßen Verfahrens sind in den abhängigen Ansprüchen gekennzeichnet.

Weitere Merkmale und Vorteile der Erfindung ergeben sich aus der nachfolgenden Beschreibung von Ausführungsbeispielen anhand der Zeichnung. Es zeigen
- Fig. 1: eine Schnittansicht eines ersten Ausführungsbeispiels eines Sensorkörpers eines Drucksensors;
- Fig. 2: eine Herstellungsform für einen Sensorkörper;
- Fig. 3: eine Schnittansicht eines zweiten Ausführungsbeispiels eines geschlossenen Drucksensors;
- Fig. 4: eine Gesamtansicht eines Drucksensors;
- Fig. 5: eine Schnittansicht eines dritten Ausführungsbeispiels eines Sensorkörpers; und
- Fig. 6: eine Schnittansicht eines vierten Ausführungsbeispiels eines Sensorkörpers.

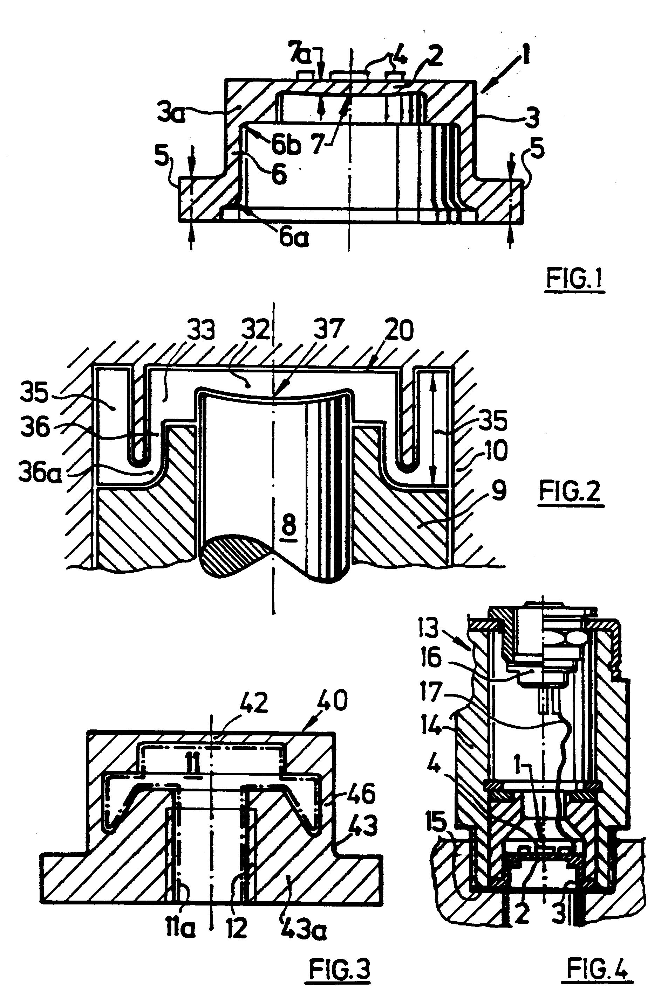

In Fig. 1 ist ein im wesentlichen zylindrischer, hutförmiger Sensorkörper 1 dargestellt, der im wesentlichen aus den beiden funktionalen Teilen einer relativ dünnen, verformbaren Membran 2 und einer relativ stabilen Basis 3 sowie mit einer Einspannstelle 5 einstückig gebildet ist. Auf der Membran 2 sind mehrere Meßwiderstände 4 aufgebracht, insbesondere eine Brückenschaltung in Dickschichttechnik durch das bekannte Siebdruckverfahren aufgedruckt, die die Verformung der Membran 2 bei Druckbeaufschlagung meßtechnisch durch Widerstandsänderungen erfassen.

Am unteren Rand der Basis 3 ist eine stabile, starre Einspannstelle bzw. ein Einspannring 5 ausgebildet, durch die der Sensorkörper 1 an die Meßstelle anschließbar ist, wie dies mittels Doppelpfeilen angedeutet ist. Die Einspannstelle 5 der Basis 3 ist über ein relativ biegeweiches Übergangs-Rohrstück 6, das aus zwei kurvenförmigen Übergängen 6a und 6b mit definierten Krümmungsradien besteht, an die Abstützfläche 3a der Membran 2 angeschlossen. Bei ungleichmäßiger Krafteinleitung infolge der Einspannkräfte und/oder Temperaturausdehnungen ermöglicht diese Anordnung Ausgleichsbewegungen in einer zu der Mittelachse senkrechten Ebene. Diese flexible Ausbildung des Übergangs-Rohrstückes 6 und der Übergänge 6a, 6b hilft somit, Verspannungen in der Membran und damit Meßungenauigkeiten zu vermeiden.

Die Membran 2 ist in ihrer Mitte mit größerer Membranstärke 7a ausgeführt, so daß sich die Möglichkeit einer Bombierung 7 der Membran 2 ergibt, die in Fig. 2 überhöht dargestellt ist. Hierdurch sind bei hoher Ansprechempfindlichkeit hohe Druckbelastungen der Membran 2 möglich.

In Fig. 2 ist die Herstellung des Sensorkörpers 20 durch gemeinsames, gleichzeitiges Formen sowohl der Membran 32 als auch der Basis 33 mit ihrer Einspannstelle 35 aus keramischem Material dargestellt. Hierbei ist die Einspannstelle 35 gegenüber der Darstellung in Fig.1 bis zur Oberseite der Membran 32 hochgezogen, so daß sich eine weiter erhöhte, definierte Biegeweichheit des Übergangs-Rohrstücks 36 ergibt. Zudem kann bei dieser Ausführung die Oberseite der Membran 32 und die Oberseite des Einspannrings 35 in einem Arbeitsgang bearbeitet, beispielsweise geläppt werden und nach dem Brennen des Sensorkörpers 20 gemeinsam beschichtet werden bzw. im Siebdruckverfahren gemeinsam bedruckt werden.

Zur Herstellung des Sensorkörpers 20 wird zunächst keramisches Pulver in den Formhohlraum zwischen einem Preßstempel 8 und einem Gegenwerkzeug 10 eingefüllt und durch gegenseitigen hohen Druck hochverdichtet. Dabei ergibt sich die gewünschte Membranstärke 37 der Membran 32, wobei der Hub des Preßstempels 8 zur Erzielung verschiedener Membranstärken 37 (zur Anpassung an den jeweils gewünschten Druckbereich) einstellbar ist.

Wesentlich ist bei dem gemeinsamen Formen des Sensorkörpers 20 ein den Preßstempel 8 umgebendes Preßrohr 9, das insbesondere die Einspannstelle 35, Übergangsbereiche 36a und das Übergangs-Rohrstück 36 mit definierten Radien und Wandstärken ausbildet. Durch schmiedeartiges Pulsieren des Preßstempels 8 und des Preßrohres 9 gegenüber dem Gegenwerkzeug 10 ergibt sich ein besonders homogenes Gefüge des ungebrannten Rohteils des Sensorkörpers 20 mit besonders hoher Festigkeit ohne die bisher üblichen Grenzflächen. Der so zusammengefügte einstückige Sensorkörper 20 wird dann, wie bereits bekannt, gebrannt.

In Fig. 3 ist ein aufgrund der hohen Festigkeit ermöglichter Sensorkörper 40 gezeigt, der neben einem Hohlraum 11 bereits ein bei der Formgebung des Keramikrohteils in einem unteren Bereich 43a einer Basis 43 ausgebildetes Anschlußgewinde 12 aufweist und somit bei dieser Ausführung die Einspann- bzw. Anschlußstelle bildet. Zur Bildung des Hohlraumes 11 während des Formvorganges ist ein entsprechend geformter Kerneinsatz 11a (strichpunktiert) aus verdampfbarem oder sublimierbarem Material, z. B. Hexabrombenzol vorgesehen. Über das Anschlußgewinde 12 als Einspannstelle ist ein direkter Anschluß an eine Druckleitung_{,} beispielsweise eine Hydraulikleitung einer Maschine oder eine Bremsleitung eines Fahrzeuges, besonders einfach möglich. Die beim Einschrauben entstehenden Spannungen werden durch die Zwischenschaltung eines Übergangs-Rohrstücks 46 dabei von der Membran 42 ferngehalten. Ein gesondertes Gehäuse zur Umhüllung oder Lagerung des Sensorkörpers 40 ist somit nicht mehr nötig. Diese besonders einfache Ausführung weist wenige Herstellschritte und geringe Herstellkosten auf.

In Fig. 4 ist der Sensorkörpers 1 gemäß Fig.1 mit geringem Umfangsspalt in einem Sensorhalter 13 angeordnet, der in einem Einschraubgehäuse 14 mittels einer Dichtung 15 an eine Meßstelle angeschlossen ist. Innerhalb des Einschraubgehäuses 14 ist ein Meßverstärker 16 vorgesehen, der die Widerstandsänderungen an der Membran 2 weiterverarbeitet. Der Sensorkörper 1 ist dabei ohne gesonderte Einspannungsplatten, wie bei den bekannten, oben angeführten Ausführungen noch nötig, direkt an die Meßstelle anschließbar. Wie aus dieser Anordnung ersichtlich, ist damit eine direkte Beaufschlagung der Membran 2 durch das zu überwachende Druckfluid, z. B. eine Bremsflüssigkeit eines Fahrzeugs möglich, ohne weitere Übertragungsmedien zu benötigen. Da zudem die keramische Membran 2 chemisch resistent ist, eignet sich diese Anordnung insbesondere für den Einsatz bei chemisch aggressiven Fluiden. Hierbei ist das aus den Widerständen 4 bestehende Meßnetzwerk auf der von dem Druckfluid abgewandten Membranseite vorgesehen, so daß die Widerstände 4 und deren Verdrahtung bzw. Verbindungskabel 17 mit dem Druckfluid nicht in Berührung kommen.

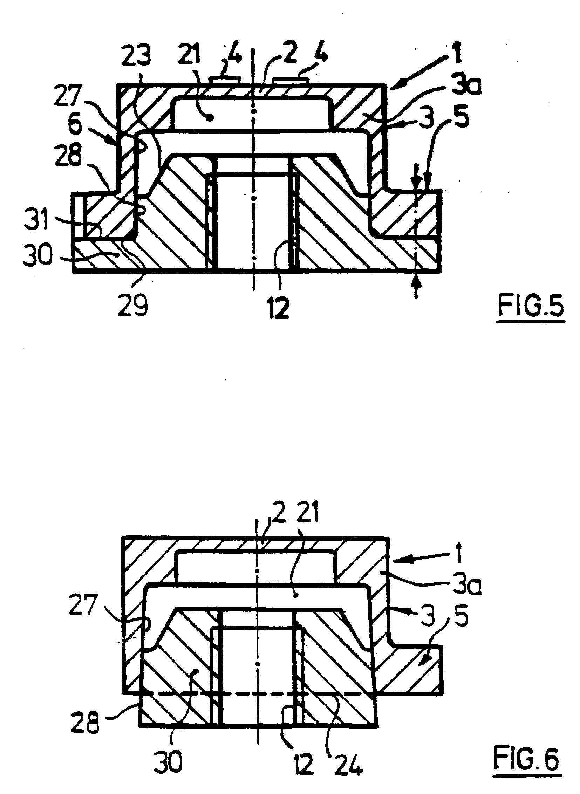

Die Figuren 5 und 6 zeigen weitere Ausgestaltungen der Erfindung.

In Fig. 5 ist als Hauptbestandteil eines erfindungsgemäßen Drucksensors ein im wesentlichen zylindrischer, topfförmiger oder hutförmiger Sensorkörper 1 dargestellt, der aus einer relativ dünnen, verformbaren Membran 2 und einer relativ stabilen, hutförmigen Basis 3 sowie mit einer Einspannstelle 5 einstückig gebildet ist. Auf der Membran 2 sind mehrere Meßwiderstände 4 aufgebracht, insbesondere eine Brückenschaltung in Dickschichttechnik, die bei Druckbeaufschlagung die Verformung der Membran 2 durch Widerstandsänderungen erfassen. Es sei darauf hingewiesen, daß zur Verdeutlichung die Bezugszeichen der wesentlichen Teile gleich mit denen der Figuren 1 und 3 gewählt wurden.

Unterhalb der Membran schließt sich an deren Umfang 3a ein rohrförmiger Übergang 6 zur Einspannstelle 5 an, der aufgrund der relativ dünnen Ausbildung eine gewisse Elastizität aufweist und somit die Übertragung von Verspannungen auf die Membran vermeiden hilft.

Im Bereich der Übergänge 6 ist innerhalb des Basisteils 3 eine Innenfläche 27 vorgesehen, die bevorzugt zylindrisch ausgebildet ist und mit der gegenüberliegenden Außenumfangsfläche 28 eines Einfügestücks 30 im zusammengesetzten Zustand des Sensorkörpers 1 in Art einer Passung in Kontakt steht. Neben dieser ringförmigen Grenzfläche zwischen der Innenfläche 27 und der Außenfläche 28 sind in einer Ebene senkrecht hierzu weitere Grenzflächen 29/31 vorgesehen. Diese Grenzflächen berühren einander, so daß während des nachfolgenden Brennens des gemäß Fig. 5 zusammengesetzten Sensorkörpers 1 ein einstückiger Sensorkörper 1 des Drucksensors durch die Verbindung an den Grenzflächen 27/28 und 29/31 entsteht.

Das Einfügestück 30 bildet dabei zusammen mit dem gegenüberliegenden Membranteil 2 des Sensorkörpers 1 einen Hohlraum 21 aus, in den über einen Anschluß 12, insbesondere ein Anschlußgewinde, ein Fluid eingeleitet werden kann, so daß dieses die relativ dünne Membran 2 beaufschlagt. Wie ersichtlich, weist das Einfügestück 30 eine einfache, pfropfenartige Form ohne Hinterschneidungen auf, so daß dieses relativ einfach aus keramischer Masse geformt und anschließend in den aus gleichem oder im wesentlichen gleichen Material bestehenden Sensorkörper 1 und dessen Basisteil 3 eingesetzt werden kann. Durch das Einsetzen wird dann der Hohlraum 21 gebildet, so daß keinerlei Kerneinsätze oder dergleichen notwendig sind. Das Einfügestück 30 mit einfacher Außengestalt läßt sich somit sehr genau herstellen, so daß dies mit seiner Außenumfangsfläche 28 in die entsprechend geformte Innenfläche 27 des Basisteils 3 in enger Passung eingefügt werden kann. Im oberen Teil 23 des Einfügestücks 30 weist die Außenumfangsfläche 28 eine kegelförmige Ausnehmung auf, so daß geringfügige Ausgleichsbewegungen der Übergänge 6 nicht behindert werden. Diese geringfügige Bewegungsmöglichkeit der dünnen Übergänge 6 sichert somit die Verspannungsfreiheit der Membran 2.

Nach dem Brennen des so zusammengefügten Sensorkörpers 1 läßt sich dieser an der ringförmigen Einspannfläche 5, wie mit den Pfeilen angedeutet, an eine Meßstelle anschließen. Jedoch kann der Anschluß auch lediglich über das Anschlußgewinde 12 erfolgen, so daß keine weiteren Befestigungsteile notwendig sind und somit die flanschartige Einspannstelle 5 entfallen kann, wie dies in der linken Hälfte der Fig. 6 dargestellt ist. Durch die im wesentlichen um 90° versetzten Grenzflächen 27/28 und 29/31 ergibt sich selbst bei hoher Druckbeaufschlagung des Hohlraumes 21 keine Gefahr, daß sich die Grenzfläche 29/31 durch Schälbeanspruchung lösen könnte. Durch die erreichte Verbindungsfestigkeit ist dieser Drucksensor somit auch für sehr hohe Drücke geeignet.

In Fig. 6 ist eine abgewandelte Ausführungsform des Drucksensors mit den gleichen Bezugszeichen dargestellt. Im Unterschied zu Fig. 5 ist jedoch die zylindrische Ausgestaltung der Innenfläche 27/Außenfläche 28 durch eine leicht konische Ausbildung ersetzt, so daß geringfügige Abweichungen der Innen-/Außendurchmesser der Grenzflächen 27 und 28 durch entsprechend weiteres Einschieben des Einfügestückes 30 in das Basisteil 3 ausgeglichen werden kann. Dadurch sind Fertigungstoleranzen, die insbesondere durch das abrasive Verhalten von Keramikmaterial bedingt sind, bei der Montage der Basis 3 und des Einfügestückes 30 in den Sensorkörper 1 leicht auszugleichen. Eventuell überstehende Bereiche des Einfügestücks 30 können im ungebrannten (grünen) Zustand entlang einer Linie 24 abgetrennt werden, sofern eine bündige Unterseite, z.B. zur Anlage einer Dichtscheibe erwünscht ist. Bei Befestigung des Drucksensors alleine an Anschlußgewinde 12 stört ein geringfügig über die Unterseite des Sensorkörpers 1 überstehendes Einfügestück 30 jedoch nicht. Ein Dichtring kann dabei an der Unterseite des Einfügestücks 30 vorgesehen sein.

## Patentansprüche

1. Drucksensor (1;13), der einen Hohlraum (11;21) aufweist, der auf einer Stirnseite durch eine in einem starren Abstützteil (3a) des Sensorkörpers (3;20;40) integrierte Membran (2; 32; 42) begrenzt ist, auf der Meßelemente (4), insbesondere Meßwiderstände in Form einer elektrischen Brückenschaltung aufgebracht sind, wobei der starre Abstützteil (3a; 33), in dem die Membran (2; 32; 42) ausgebildet ist, über einen flexiblen Übergangsteil (6; 36; 46) mit einem starren Einspannteil (5; 35; 43a) in Verbindung steht,
dadurch gekennzeichnet, daß
der keramische Sensorkörper (3; 20; 40) mit Membran (2; 32; 42), Abstützteil (3a; 33), dem flexiblen Übergangsteil (6; 36; 46) und dem starren Einspannteil (5; 35; 43a) einstückig ausgebildet ist.

2. Drucksensor nach Anspruch 1, dadurch gekennzeichnet, daß der Einspannteil (5) als sich radial erstreckender Ringflansch ausgebildet ist.

3. Drucksensor nach Anspruch 1 oder 2, dadurch gekennzeichnet, daß der Einspannteil (35) ringförmig ist und mit seiner freien Stirnfläche in den Bereich der Ebene der Membranoberseite gezogen ist, insbesondere mit dieser fluchtet.

4. Drucksensor nach einem der vorhergehenden Ansprüche, dadurch gekennzeichnet, daß eine Seite der Membran (32) mit einer Bombierung (37) versehen ist.

5. Drucksensor nach einem der vorhergehenden Ansprüche, dadurch gekennzeichnet, daß der Einspannteil (5;35;43a) eine vorzugsweise mit Gewinde (12) versehene Durchgangsöffnung zum Hohlraum (21) hin aufweist und mit seiner inneren Stirnfläche den Hohlraum (21) auf der der Membran (42) gegenüberliegenden Seite definiert.

6. Drucksensor nach Anspruch 5, dadurch gekennzeichnet, daß der Einspannteil ganz oder teilweise durch einen Stopfen (30) gebildet ist, der vor dem Brennen des Sensorkörpers axial in den Hohlraum (21) eingepaßt ist.

7. Verfahren zum Herstellen eines Drucksensors (1; 13) unter Bilden eines keramischen Sensorkörpers (3; 20; 40) mit integrierter Membran (2; 32; 42) in Rohform, Brennen des Sensorkörpers und Versehen einer Fläche der Membran (2; 32; 42) mit Meßelementen (4), insbesondere in Dickfilmschichttechnik,
dadurch gekennzeichnet, daß
vor dem Brennen der Sensorkörper (3; 20; 40) einschließlich der Membran (2; 32; 42), einem dazu beabstandeten Einspannteil (5; 35) und einem die Membran (2; 32; 42) und den Einspannteil (5; 35) verbindenden flexiblen Übergangsteil (6; 36; 46) in einem Verfahrensschritt aus keramischem Pulver in einer Preßform (8, 9, 10) zu einem einstückigen Sensorkörper (3; 20; 40) geformt wird oder zur Bildung des Einspannteils und eines Hohlraumes (21) ein keramischer Stopfen (30) axial in den Sensorkörper (3) eingepaßt wird.

8. Verfahren nach Anspruch 7, dadurch gekennzeichnet, daß zur Bildung eines definierten Hohlraums (11) vorzugsweise ein einziger, entsprechend komplementär geformter, sublimierbarer Formkörper (11a) vor dem Pressen in die Form (8, 9, 10) eingesetzt wird.

9. Verfahren nach Anspruch 7, dadurch gekennzeichnet, daß zum Pressen des Sensorkörpers (3; 20; 40) zwei zueinander konzentrische und gegeneinander axial verschiebbare Stempel (8, 9) verwendet werden.

10. Verfahren nach Anspruch 7 oder 9, dadurch gekennzeichnet, daß der Stopfen (30) vorzugsweise ebenfalls aus keramischem Pulver unter Bildung einer vorzugsweise mit Gewinde (12) versehenen Durchgangsöffnung in einer Form gepreßt wird.

## Claims

1. A pressure sensor (1;13) including a cavity (11;21) limited at a front end thereof by a diaphragm (2;32;42) integrated in a rigid support portion (3a) of the sensor body (3;20;40), said diaphragm (2;32;42) having formed thereon measuring elements (4), particularly measuring resistors being formed as an electrical bridge circuit, said rigid support portion (3a;33) having formed therein said diaphragm (2;32;42) being connected to a rigid clamping portion (5;35;43a) via a flexible transition portion (6;36;46),
characterized in that
said ceramic sensor body (3;20;40) is formed in one piece with diaphragm (2;32;42), support portion (3a;33), said flexible transition portion (6;36;46) and said rigid clamping portion (5;35;43a).

2. The pressure sensor of claim 1, characterized in that said clamping portion (5) is formed as a radially extending annular flange.

3. The pressure sensor of claim 1 or 2, characterized in that said clamping portion (35) is of annular shape and that the free front end thereof is drawn into the region of the plane of the upper side of the diaphragm, particularly is in alignment therewith.

4. The pressure sensor of one of the preceding claims, characterized in that one side of said diaphragm (32) is provided with a curvature (37).

5. The pressure sensor of one of the preceding claims, characterized in that said clamping portion (5;35;43a) comprises a preferably threaded port (12) directed to said cavity (21), the interior front surface of said clamping portion (5;35;43a) defining said cavity (21) at the side opposing said diaphragm (42).

6. The pressure sensor of claim 5, characterized in that the clamping portion is totally or partially formed by a stopper (30) fitted axially into said cavity (21) before burning the sensor body.

7. A method for manufacturing a pressure sensor (1;13) by forming a ceramic sensor body (3;20;40) having an integrated diaphragm (2;32;42) in a crude form, burning the sensor body and providing measuring elements (4) on a surface of said diaphragm (2;32;42), especially in a thick-film layer technique,
characterized in that,
before burning, said sensor body (3;20;40) including said diaphragm (2;32;42), a clamping portion (5;35) spaced thereto and a flexible transition portion (6;36;46) connecting said diaphragm (2;32;42) and said clamping portion (5;35), is formed from ceramic powder in a mold (8,9,10) in one method step to become a unitary sensor body (3;20;40), or a ceramic stopper (30) is axially fitted into said sensor body (3) to form the clamping portion and a cavity (21).

8. The method of claim 7, characterized in that, before pressing, preferably a single mold insert (11a) being correspondingly complementary-formed and sublimable is inserted into said mold (8,9,10) to form a defined cavity (11).

9. The method of claim 7, characterized in that two pistons (8,9) being concentrical to and axially movable against each other are used for pressing said sensor body (3;20;40).

10. The method of claim 7 or 9, characterized in that said stopper (30), too, is preferably pressed from ceramic powder in a mold by forming a preferably threaded port (12).

## Revendications

1. Capteur de pression (1 ; 13) présentant un espace creux (11 ; 21) délimité sur un côté frontal par une membrane (2 ; 32 ; 42) intégrée dans une partie de support (3a) rigide du corps du capteur (3 ; 20 ; 40), sur laquelle sont fixés des éléments de mesure (4), notamment des résistances de précision sous la forme d'un montage électrique en pont, sachant que la partie de support (3a ; 33) dans laquelle est réalisée la membrane (2 ; 32 ; 42) est reliée, à une partie d'encastrement rigide (5 ; 35 ; 43a) par l'intermédiaire d'une partie de transition flexible (6 ; 36 ; 46), caractérisé en ce que le corps du capteur en céramique (3 ; 20 ; 40) avec la membrane (2 ; 32 ; 42), la partie de support (3a ; 33), la partie de transition flexible (6 ; 36 ; 46) et la partie d'encastrement rigide (5 ; 35 ; 43a) est réalisé d'un seul tenant.

2. Capteur de pression selon la revendication 1, caractérisé en ce que la partie d'encastrement (5) est réalisée en tant que bride annulaire s'étendant radialement.

3. Capteur de pression selon la revendication 1 ou 2, caractérisé en ce que la partie d'encastrement (35) est annulaire et est tirée par sa surface frontale libre dans la zone du plan de la face supérieure de la membrane, notamment est en alignement avec cette dernière.

4. Capteur de pression selon l'une des revendications précédentes, caractérisé en ce qu'un côté de la membrane (32) est muni d'un bombement (37).

5. Capteur de pression selon l'une des revendications précédentes, caractérisé en ce que la partie d'encastrement (5 ; 35 ; 43a) présente un orifice de passage muni, de préférence, d'un filetage (12) et menant à l'espace creux (21) et délimite avec sa surface frontale intérieure l'espace creux (21) sur le côté opposé à la membrane (42).

6. Capteur de pression selon la revendication 5, caractérisé en ce que la partie d'encastrement est partiellement ou totalement formée par un bouchon (30) qui, avant la cuisson du corps du capteur, est encastré axialement dans l'espace creux (21).

7. Procédé pour fabriquer un capteur de pression (1 ; 13) en formant un corps de capteur en céramique (3 ; 20 ; 40) avec une membrane (2 ; 32 ; 42) intégrée à l'état brut, en cuisant le corps du capteur et en munissant une surface de la membrane (2 ; 32 ; 42) d'éléments de mesure (4), notamment selon la technique des couches épaisses, caractérisé en ce qu'avant la cuisson, le corps du capteur (3 ; 20 ; 40) avec la membrane (2 ; 32 ; 42), une partie d'encastrement (5 ; 35) qui en est éloignée et une partie de transition flexible (6 ; 36 ; 46) reliant la membrane (2 ; 32 ; 42) à la partie d'encastrement (5 ; 35) est formé en un corps de capteur (3 ; 20 ; 40) d'un seul tenant en une seule opération à partir de poudre céramique moulée dans une matrice de compression (8, 9, 10), ou en ce que pour former la partie d'encastrement et un espace creux (21), un bouchon en céramique (30) est encastré axialement dans le corps du capteur (3).

8. Procédé selon la revendication 7, caractérisé en ce que pour former un espace creux (11) défini, un noyau (11a), de préférence, unique et présentant une forme complémentaire correspondante est placé dans le moule (8, 9, 10) avant la compression.

9. Procédé selon la revendication 7, caractérisé en ce que pour comprimer le corps du capteur (3 ; 20 ; 40), on utilise deux pistons (8, 9) concentriques l'un par rapport à l'autre et pouvant être déplacés axialement l'un vers l'autre.

10. Procédé selon la revendication 7 ou 9, caractérisé en ce que le bouchon (30), qui est, de préférence, également en poudre céramique, est comprimé dans un moule en réalisant un orifice de passage muni, de préférence, d'un filetage (12).
